# EUROPEAN PATENT APPLICATION

(11) **EP 4 722 827 A1**
(43) Date of publication of application: **08.04.2026**
(21) Application number: 24842262.8
(22) Date of filing: 10.07.2024
(51) Int. Cl.: G05B 9/03

(54) **REDUNDANCY CONTROL METHOD FOR ON-BOARD RING NETWORK HETEROGENEOUS SYSTEM, A SYSTEM, AND STORAGE MEDIUM**

(30) Priority: 14.07.2023 CN 202310869973
(71) Applicant: Chongqing Changan Automobile Co., Ltd., Chongqing 400023 (CN)
(72) Inventor: CHEN, Derui, Chongqing 400023 (CN); ZHANG, Peng, Chongqing 400023 (CN); HUANG, Jie, Chongqing 400023 (CN); DENG, Zhi, Chongqing 400023 (CN); YU, Chengyang, Chongqing 400023 (CN)
(74) Representative: Elzaburu S.L.P.
(86) International application number: PCT/CN2024/104823
(87) International publication number: WO 2025/016268

(57) **Abstract**

This application relates to a redundancy control method and system for an in-vehicle ring network heterogeneous system, and a storage medium, and relates to the technical field of in-vehicle unit systems. The method includes in each ring network, any two adjacent in-vehicle unit systems regularly exchange detection messages , and determining a communication link status corresponding to the two in-vehicle unit systems based on a message exchange result; when the communication link status is abnormal, triggering a communication redundancy control protocol; in response to the communication redundancy control protocol, determining position information of the two in-vehicle unit systems with an abnormal communication link in a vehicle-wide communication topology, and generating, based on the position information, a redundancy control rule for restoring communication between the two current in-vehicle unit systems; executing the redundancy control rule to restore communication between the two current in-vehicle unit systems by adjusting communication port blocking states of relevant in-vehicle unit systems on the redundancy link of the two current in-vehicle unit systems; where the relevant in-vehicle unit systems are in or not in a same ring network. The solution of the present application achieves protocol compatibility while ensuring the reliability of the in-vehicle ring network heterogeneous system.

## Description

This application claims priority to Chinese patent application No. 202310869973.8, filed with the China National Intellectual Property Administration on July 14, 2023 and entitled "REDUNDANCY CONTROL METHOD AND SYSTEM FOR IN-VEHICLE RING NETWORK HETEROGENEOUS SYSTEM, AND STORAGE MEDIUM". The disclosure of the aforementioned application is hereby incorporated by reference in its entirety.

### TECHNICAL FIELD

The present application relates to the technical field of in-vehicle unit systems and, in particular, to a redundancy control method for an in-vehicle ring network heterogeneous system, a redundancy control system for an in-vehicle ring network heterogeneous system and a computer-readable storage medium.

### BACKGROUND

The rapid advancement of the development of vehicle electrification and intellectualization has put forward higher requirements for capabilities of an in-vehicle system. To meet the demands of high-level assisted driving and functional servitization, an in-vehicle control system is evolving toward high integration and high computing power, while a vehicle electronic and electrical architecture is gradually advancing toward a "central + regional" form with implementation of high-computing-power computing centers. At present, technical and industrial chains of the vehicle industry are extremely extensive both horizontally and vertically. Although various technical standards have been formulated by the industry to unify the compatibility between different products, the in-vehicle system still cannot get rid of the status quo of complex heterogeneous systems. In an in-vehicle heterogeneous system, an in-vehicle communication system plays a most critical role in the coordination among various systems. With the development of intelligent vehicle control and assisted driving technologies, higher reliability requirements have also been put forward for the in-vehicle communication system. For this reason, many technology research enterprises have introduced reliable communication technologies in fields such as telecommunications and industrial control into the field of in-vehicle communications. To ensure the reliability of the in-vehicle communication system, implementing redundant communication is an effective solution. However, the prior art generally fails to balance the communication reliability brought by redundant communication and good system compatibility. To address this issue, it is necessary to create an in-vehicle terminal communication solution that simultaneously ensures both high communication reliability and excellent protocol compatibility.

### SUMMARY

A first objective of the present application is to provide a redundancy control method for an in-vehicle ring network heterogeneous system to solve a problem that the prior art generally fail to balance the communication reliability brought by redundant communication and good system compatibility. A second objective of the present application is to provide a redundancy control for an in-vehicle ring network heterogeneous system. A third objective of the present application is to provide a computer-readable storage medium.

In order to achieve the above objectives, the technical solutions adopted in the present application are as follows.

A first aspect of the present application provides a redundancy control method for an in-vehicle ring network heterogeneous system, where the method includes: in each ring network, regularly exchanging, by any two adjacent in-vehicle unit systems, detection messages, and determining a communication link status corresponding to two in-vehicle unit systems based on a message exchange result; when the communication link status is abnormal, triggering a communication redundancy control protocol; in response to the communication redundancy control protocol, determining position information of two in-vehicle unit systems with an abnormal communication link in a vehicle-wide communication topology, and generating, based on the position information, a redundancy control rule for restoring communication between the two current in-vehicle unit systems; executing the redundancy control rule to restore communication between the two current in-vehicle unit systems by adjusting communication port blocking states of relevant in-vehicle unit systems on a redundant link of the two current in-vehicle unit systems; where the relevant in-vehicle unit systems are in or not in a same ring network.

Optionally, the method further includes: constructing a vehicle-wide communication topology rule, which includes: performing networking topology design for an in-vehicle ring network system based on design information of a vehicle-wide electronic and electrical architecture to obtain an initial vehicle-wide communication topology; identifying key links in the initial vehicle-wide communication topology, and taking the identified key links as links to be provided with redundancy; identifying in-vehicle unit systems at both ends of each key link one by one, and determining design information of a redundant link based on historical communication information between the two identified in-vehicle unit systems; performing redundant link deployment in the initial vehicle-wide communication topology based on determined design information of redundant links to obtain the vehicle-wide communication topology rule.

Optionally, the determining the design information of the redundant link includes: determining communication performance and a corresponding communication protocol of the redundant link; where the determined communication protocol needs to meet a corresponding communication performance requirement; the method further includes: during the redundant link deployment, presetting a compatibility rule for the corresponding communication protocol in each set working scenario.

Optionally, the regularly exchanging, by any two adjacent in-vehicle unit systems, detection messages, and determining the communication link status corresponding to the two in-vehicle unit systems based on the message exchange result, includes: exchanging, by two adjacent in-vehicle unit systems, based on a preset link detection protocol, link detection messages respectively generated by the two adjacent in-vehicle unit systems; generating, by each in-vehicle unit system, a feedback message record based on the number of received link detection messages, and sending the feedback message record back to an in-vehicle unit system at the other end; determining, by each in-vehicle unit system, the sent number of link detection messages and the received number recorded in the feedback message based on the preset link detection protocol, to determine a current communication link status.

Optionally, the determining, by each in-vehicle unit system, the sent number of link detection messages and the received number recorded in the feedback message based on the preset link detection protocol to determine the current communication link status includes: when each in-vehicle unit system acts as a message sender and a message receiver, respectively determining the sent number of link detection messages and the received number recorded in the feedback message based on the preset link detection protocol; for the message sender, when it is determined, based on the preset link detection protocol, that an absolute value of a difference between the sent number of link detection messages and the received number recorded in the feedback message from the in-vehicle unit system at the other end is greater than or equal to a first preset threshold, determining that a first abnormal condition is established; otherwise, determining that the first abnormal condition is not established; for the message receiver, when the in-vehicle unit system at the other end determines, based on the preset link detection protocol, that an absolute value of a difference between the sent number of link detection messages and the received number recorded in the feedback message is greater than or equal to a second preset threshold, determining that a second abnormal condition is established; otherwise, determining that the second abnormal condition is not established; when both the first abnormal condition and the second abnormal condition are established, determining that the communication link status between the two current in-vehicle unit systems is abnormal.

Optionally, in the vehicle-wide communication topology, any two in-vehicle unit systems can directly perform communication interaction or perform communication interaction by taking another in-vehicle unit system as a relay node; the method further includes: performing system initialization, which includes: setting up independent redundant communication between in-vehicle unit systems of different categories based on categories to which the in-vehicle unit systems belong; setting up independent communication for triggering the communication redundancy control protocol; performing virtual local area network blocking processing on communication between in-vehicle unit systems other than the independent redundancy communication and the independent communication, to make any two in-vehicle unit systems have one and only one communication link in a normal operation state.

Optionally, the communication redundancy control protocol includes: a protocol type identifier, a status, a sub-status, a node identifier, a link identifier and an extension field; the protocol type identifier is used to indicate a protocol type; the status is used to indicate a link status; the sub-status is used to identify whether link switching needs to be executed; the link identifier is used to label a link number; the extension field is used to indicate additional information of a message.

Optionally, before triggering the communication redundancy control protocol, the method further includes: when the communication link status is abnormal, continuously sending a preset number of frames of the communication redundancy control protocol carrying link abnormality to a corresponding in-vehicle unit system, and sending the communication redundancy control protocol once every preset triggering cycle until the communication redundancy control protocol is triggered.

Optionally, the generating, based on the position information, the redundancy control rule for restoring communication between the two current in-vehicle unit systems includes: determining a relay in-vehicle unit system on the redundant link between the two current in-vehicle unit systems based on the position information; determining blocking states of communication ports of the relay in-vehicle unit system and the two current in-vehicle unit systems when the redundancy link is active, and taking the blocking states as target states for in-vehicle unit systems; modifying, based on the target states, forwarding database static tables and virtual local area network tables for switches of the in-vehicle unit systems, and taking the modified forwarding database static tables and the modified virtual local area network tables for the switches as the redundancy control rule for the communication between the two current in-vehicle unit systems.

Optionally, the executing the redundancy control rule, and adjusting the communication port blocking states of relevant in-vehicle unit systems on the redundancy link of the two current in-vehicle unit systems, includes: during the adjustment of the communication port blocking states of the relevant in-vehicle unit systems, for the same in-vehicle unit system at the same time, only one communication port is in a forwarding state, and other communication ports are in a virtual local area network blocking state; before adjusting the communication port blocking state of a certain communication port to a forwarding state, a corresponding in-vehicle unit system first blocks a communication port that was originally in the forwarding state, and then proceed to adjust a current communication port blocking state.

A second aspect of the present application provides a redundancy control system for an in-vehicle ring network heterogeneous system, where the system includes: a status determining unit, configured to in each ring network, regularly exchanging detection messages by any two adjacent in-vehicle unit systems, and determine a communication link status corresponding to the two in-vehicle unit systems based on a message exchange result; a triggering unit, configured to trigger, when the communication link status is abnormal, a communication redundancy control protocol; a rule generating unit, configured to determine, in response to the communication redundancy control protocol, position information of the two in-vehicle unit systems with an abnormal communication link in a vehicle-wide communication topology, and generate, based on the position information, a redundancy control rule for restoring communication between the two current in-vehicle unit systems; an executing unit, configured to execute the redundancy control rule to restore communication between the two current in-vehicle unit systems by adjusting communication port blocking states of relevant in-vehicle unit systems on a preset new communication link of the two current in-vehicle unit systems; where the relevant in-vehicle unit systems are in or not in a same ring network.

A third aspect of the present application provides a computer-readable storage medium, where the computer-readable storage medium stores instructions, which, when running on a computer, cause the computer to implement the above redundancy control method for the in-vehicle ring network heterogeneous system.

Beneficial effects of the present application:
1) According to the solution of the present application, in each in-vehicle unit ring network, in-vehicle unit systems exchange messages with each other, and determine communication link statuses among them based on the exchanged messages, instead of making a determination for all communication links globally one by one. In this way, when an abnormality occurs in a certain communication link, the in-vehicle unit systems at both ends of a corresponding link can identify the abnormality promptly. This reduces time loss of data collection in global analysis and ensures a system response speed;
2) When an abnormality occurs in a communication link, a preset communication redundancy control protocol is triggered. A redundancy control rule is determined based on the protocol, and each in-vehicle unit system is driven in accordance with a unified protocol. Even for in-vehicle unit systems supporting different redundancy protocols, the solution of the present application can achieve combined driving of multiple protocols under a framework of the unified protocol, which solves a problem of poor protocol compatibility in existing solutions;
3) Finally, based on the determined redundancy control rule, a redundant link is activated to restore communication between two in-vehicle unit systems where the communication abnormality originally existed, thus ensuring the reliability of the vehicle-wide communication.

### BRIEF DESCRIPTION OF DRAWINGS

FIG. 1 is a flowchart of steps of a redundancy control method for an in-vehicle ring network heterogeneous system provided in an implementation of the present application.
FIG. 2 is a schematic structural diagram of a ring network system provided in an implementation of the present application.
FIG. 3 is a flowchart of link detection provided in an implementation of the present application.
FIG. 4 is a schematic diagram of a link detection protocol provided in an implementation of the present application.
FIG. 5 is a schematic diagram of a communication redundancy control protocol provided in an implementation of the present application.
FIG. 6 is a schematic diagram of a protocol framework provided in an implementation of the present application.
FIG. 7 is a schematic flowchart of requirement analysis applicable to a redundancy control method for an in-vehicle ring network heterogeneous system provided in an implementation of the present application.
FIG. 8 is a schematic diagram of system data flow analysis provided in an implementation of the present application.
FIG. 9 is a system structural diagram of a redundancy control system for an in-vehicle ring network heterogeneous system provided in an implementation of the present application.

### DESCRIPTION OF EMBODIMENTS

The implementations of the present application will be described below with reference to the accompanying drawings and preferred embodiments. The person skilled in the art can easily understand other advantages and effects of the present application from the content disclosed in the present specification. The present application may also be implemented or applied through other different specific implementations, and various modifications or changes may be made to the details in this specification based on different viewpoints and applications without departing from the spirit of the present application. It should be understood that the preferred embodiments are only used to illustrate the present application and are not intended to limit the protection scope of the present application.

The rapid advancement of the development of vehicle electrification and intellectualization has put forward higher requirements for capabilities of an in-vehicle system. To meet the demands of high-level assisted driving and functional servitization, an in-vehicle control system is evolving toward high integration and high computing power, while a vehicle electronic and electrical architecture is gradually advancing toward a "central + regional" form with the implementation of high-computing-power computing centers.

At present, technical and industrial chains of the vehicle industry are extremely extensive both horizontally and vertically. Although various technical standards have been formulated by the industry to unify the compatibility between different products, the in-vehicle system still cannot get rid of the status quo of complex heterogeneous systems. In an in-vehicle heterogeneous system, an in-vehicle communication system plays a most crucial role in the coordination among various systems. With the development of intelligent vehicle control and assisted driving technologies, higher reliability requirements have also been put forward for the in-vehicle communication system. For this reason, many technology research enterprises have introduced reliable communication technologies in fields such as telecommunications and industrial control into the field of in-vehicle communications.

To ensure the reliability of the in-vehicle communication system, implementing redundant communication is an effective solution. For example, the patent application with Publication No. CN112448981A proposes "a method and device for transmitting data". This method provides a link detection and redundancy switching control method based on a static address forwarding table of a switch for an in-vehicle ring network system. It only provides a control strategy for ring network communication redundancy from the perspective of communication data forwarding, without considering the compatibility of the ring network redundancy control algorithm to products in an in-vehicle heterogeneous system, the particularity of application in an in-vehicle scenario, and a specific deployment strategy of the method in the in-vehicle system.

To address the protocol compatibility issue, the patent application with Publication No. CN115499270A proposes a "network control scheme and device, vehicle and computer storage medium". This proposal provides a multi-protocol adaptive detection, fault location and repair method. The method introduces an ERPS protocol in a traditional communication field and the TSN-CB protocol in the time-sensitive networking protocol into the in-vehicle Ethernet ring network system. It solves the protocol compatibility problem to a certain extent through protocol adaptive detection, but the proposal deploys both protocols on an in-vehicle switch, which has high requirements for hardware resources. And the system compatibility is still low.

It can be seen that the prior art fails to balance the communication reliability brought by redundant communication and good system compatibility. To solve this problem, the solution of the present application proposes a redundancy control method for an in-vehicle ring network heterogeneous system. According to the solution of the present application, in each in-vehicle unit ring network, in-vehicle unit systems exchange messages with each other, and determine communication link statuses among them based on the exchanged messages, instead of making a determination for all communication links globally one by one. In this way, when an abnormality occurs in a certain communication link, the in-vehicle unit systems at both ends of the corresponding link can identify the abnormality promptly. This reduces the time loss of data collection in global analysis and ensures the system response speed. When an abnormality occurs in a communication link, a preset communication redundancy control protocol is triggered. A redundancy control rule is determined based on this protocol, and each in-vehicle unit system is driven based on the unified protocol, which solves the problem of poor protocol compatibility in existing solutions. Finally, based on the determined redundancy control rule, a redundant link is activated to restore communication between the two in-vehicle unit systems where the communication abnormality originally existed, thereby ensuring the reliability of the vehicle-wide communication.

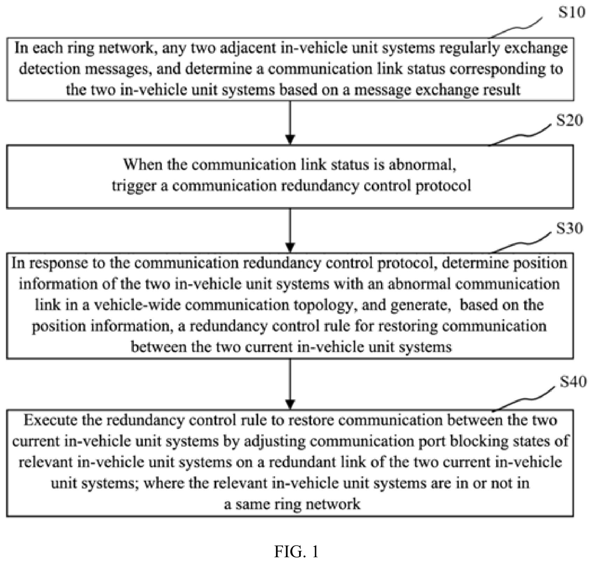

FIG. 1 is a flowchart of a redundancy control method for an in-vehicle ring network heterogeneous system provided in an implementation of the present application. As shown in FIG. 1, the implementation of the present application provides a redundancy control method for an in-vehicle ring network heterogeneous system, the method includes the following steps.

Step S10: In each ring network, any two adjacent in-vehicle unit systems regularly exchange detection messages, and determine a communication link status corresponding to the two in-vehicle unit systems based on a message exchange result.

Specifically, the solution of the present application performs redundant communication control when an abnormality occurs in a certain communication link; accordingly, the corresponding trigger condition for redundant communication must be the presence of an abnormal communication link in the vehicle-wide communication system. In existing solutions, to determine whether there is a communication abnormality in the system, a vehicle communication system often checks the communication status of each communication link one by one. This method consumes a great deal of time in data transmission and data judgment, thus resulting in significant time delay. During driving of a vehicle, to ensure the safety of passengers, it is necessary to ensure the response speed of the vehicle. Consequently, the system must maintain sufficient response speed even when determining the abnormal status of communication links. Based on this, in the solution of the present application, two adjacent in-vehicle unit systems in each ring network determine the abnormal status of the corresponding communication link. This enables synchronous determination on the abnormal status for all communication links across the entire vehicle, reduces determination delay, and improves the system response speed.

Specifically, based on a preset link detection protocol, the two adjacent in-vehicle unit systems exchange link detection messages respectively generated by them; each in-vehicle unit system generates a feedback message based on the number of received link detection messages, and sends the feedback message back to the in-vehicle unit system at the other end; each in-vehicle unit system determines the number of sent link detection messages and the received number recorded in the feedback message based on the preset link detection protocol, to determine a current communication link status.

Further, each in-vehicle unit system determining the number of sent link detection messages and the received number recorded in the feedback message based on the preset link detection protocol to determine the current communication link status, includes: each in-vehicle unit system respectively counting, when acting as a message sender and a message receiver, and determining the sent number of link detection messages and the received number recorded in the feedback message based on the preset link detection protocol; for the message sender, when it is determined, based on the preset link detection protocol, that an absolute value of a difference between the sent number of link detection messages and the received number recorded in the feedback message from the in-vehicle unit system at the other end is greater than or equal to a first preset threshold, determining that a first abnormal condition is established; otherwise, determining that the first abnormal condition is not established; for the message receiver, when the in-vehicle unit system at the other end determines, based on the preset link detection protocol, that an absolute value of a difference between the sent number of link detection messages and the received number recorded in the feedback message is greater than or equal to a second preset threshold, determining that a second abnormal condition is established; otherwise, determining that the second abnormal condition is not established; when both the first abnormal condition and the second abnormal condition are established, determining that the communication link status between the two current in-vehicle unit systems is abnormal.

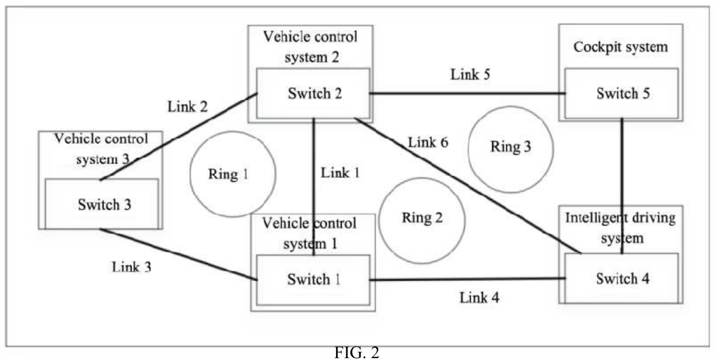

Embodiment 1: As shown in FIG. 2, corresponding in-vehicle unit systems include 5 in-vehicle unit systems in total: a vehicle body control system (vehicle control system 1, vehicle control system 2, vehicle control system 3), an intelligent driving system (IDS), and a cockpit system. The three controllers of the vehicle control system 1, the vehicle control system 2 and the vehicle control system 3 form a ring network 1 via Ethernet communication links. The intelligent driving system together with the vehicle control system 1 and the vehicle control system 2 form a ring network 2 via Ethernet communication links. The intelligent driving system together with the cockpit system and the vehicle control system 2 form a ring network 3 via Ethernet communication links. The structural feature of the in-vehicle ring network systems provided in the present embodiment is that any two of the vehicle body control system, the intelligent driving system and the cockpit system can mutually serve as communication redundancy. It should be noted that the system provided in the present embodiment is merely an example, and other forms of in-vehicle ring network systems are also applicable to the redundancy control method provided in the present application.

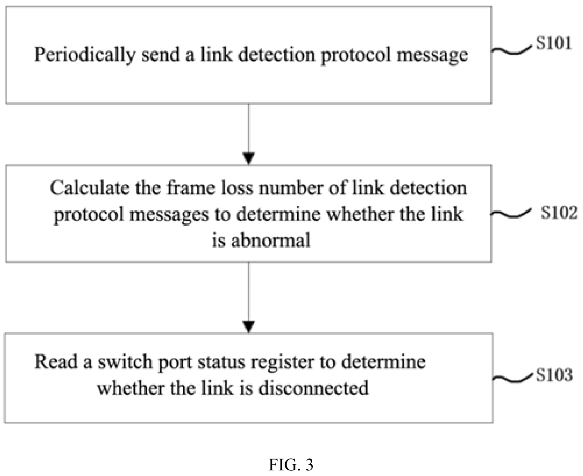

Further, when determining the communication link status, the determination process between the vehicle control system 1 and the vehicle control system 2 is taken as an example. As shown in FIG. 3, the process includes the following steps.

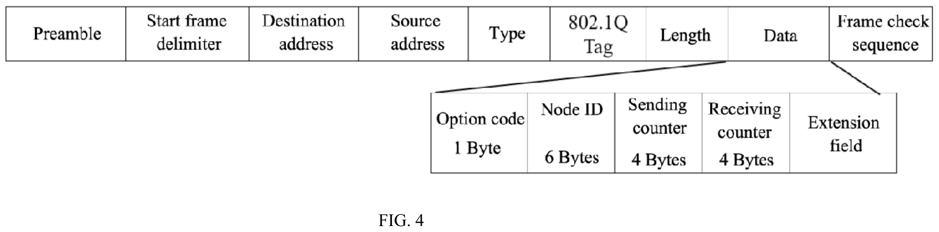

S101: The vehicle control system 1 sends a link detection protocol (detection message) to the vehicle control system 2 at a 5ms period. As shown in FIG. 4, a protocol type identifier field in the protocol is filled with 0x01; a node identifier is filled with a MAC address of the vehicle control system 1; the message sending count is filled according to the actual number of sent link detection protocol messages; the receiving count is filled according to the actual number of received link detection messages sent by the vehicle control system 2. Similarly, the vehicle control system 2 also sends link detection messages to the vehicle control system 1 in the manner described above.

S102: The vehicle control system 1 calculates the frame loss number of messages by adopting a bidirectional verification method. Based on the sending direction, after receiving the link detection message sent by the vehicle control system 2, the vehicle control system 1 extracts receiving count data in the message and compares it with message sending count data in the link detection protocol sent most recently, and determines whether local sending count - peer receiving count ≥ 3, and based on the receiving direction, it determines whether peer sending count - local receiving count ≥ 3. If the above two conditions are met simultaneously, the link between the vehicle control system 1 and the vehicle control system 2 is deemed to be blocked or disconnected.

S103: A link detection module invokes a link status detection API interface provided by the switch to read a link status of a corresponding port link. If the status is Link Down, the link is determined to be disconnected.

Step S20: When the communication link status is abnormal, trigger a communication redundancy control protocol.

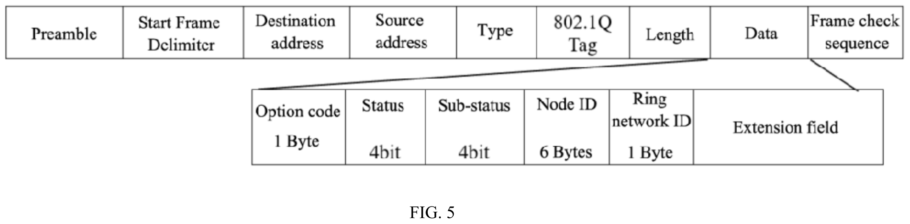

Specifically, to achieve protocol compatibility, the solution of the present application employs two protocols: a link detection protocol and a communication redundancy control protocol. As described above, the link detection protocol is mainly used for identifying a communication link fault status between the in-vehicle unit systems. With respect to the communication redundancy control protocol, as shown in FIG. 5, it includes a protocol type identifier, a status, a sub-status, a node identifier, a link identifier, and an extension field; the protocol type identifier is used to indicate the protocol type; the status is used to indicate the link status; the sub-status is used to identify whether link switching needs to be executed; the link identifier is used to label the link number; the extension field is used to indicate additional information of a message.

In the embodiment of the present application, the present application proposes a ring network redundancy communication protocol, which includes a link detection protocol and a communication redundancy control protocol. The ring network redundancy communication protocol can achieve communication link detection and link switching control. When any single link in the link is abnormal, the link can be switched to a redundant link for communication within 50ms, so as to ensure normal communication among all nodes in the links. When two or more links are abnormal, the link can also be switched to a redundant link for communication within 50ms, so as to ensure normal communication between those communication nodes that still have interconnected links. Meanwhile, the control of the protocol in the present application can ensure normal communication in in-vehicle application scenarios such as inconsistent power-on sequences of various nodes of the link and restart of different nodes.

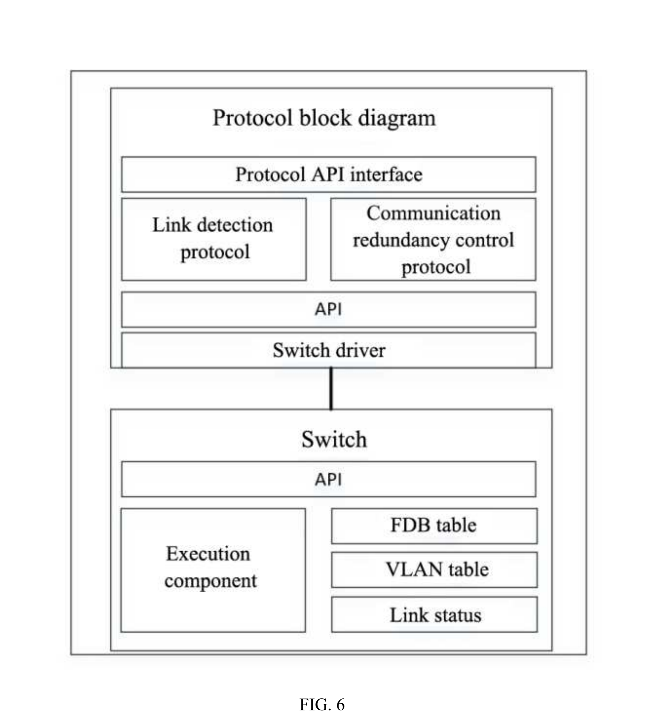

In the embodiment of the present application, as shown in FIG. 6, the solution of the present application provides an innovative communication redundancy control protocol, and defines positions and meanings of each identifier in the communication control protocol. Then, when there is a status change in a communication link, it is only necessary to modify the filled information in the communication redundancy control protocol, after which triggering can be performed directly based on this communication redundancy control protocol. This not only achieves the perception of communication abnormalities, but also ensures the response speed of subsequent redundancy control linkage.

In one possible implementation manner, the protocol identifier is filled with 0x2 to represent the communication redundancy control protocol; the status is used to indicate whether a link is abnormal, it is filled with 0x1 to indicate a link abnormality; the sub-status is used to identify whether switching needs to be executed, it is filled with 0x1 to indicate switching; the link identifier is used to label the link number to clarify which specific link is abnormal. This protocol, a ring network redundancy control protocol, is periodically sent by modules in the link with a unified multicast address; where, the modules also include modules adopting the TSN-CB (Time-Sensitive Network, time-sensitive network) protocol. The purpose of this design is to perform full link detection on the vehicle-wide communication network, so as to meet the requirements of full-link communication redundancy.

Step S30: In response to the communication redundancy control protocol, determine position information of the two in-vehicle unit systems with an abnormal communication link in a vehicle-wide communication topology, and generate, based on the position information, a redundancy control rule for restoring communication between the two current in-vehicle unit systems.

Specifically, a relay in-vehicle unit system on the redundant link between the two current in-vehicle unit systems is determined based on the position information; blocking states of communication ports of the relay in-vehicle unit system and the two current in-vehicle unit systems when the redundant link is active are determined, and the blocking states are taken as target states for the in-vehicle unit systems; based on the target states, forwarding database static tables and virtual local area network tables for switches of the in-vehicle unit systems are modified, and the modified forwarding database static tables and modified virtual local area network tables for the switches are taken as the redundancy control rule for the communication between the two current in-vehicle unit systems.

Based on this, the solution of the present application further includes: constructing a vehicle-wide communication topology rule, which includes: designing a networking topology for the in-vehicle ring network system based on design information of a vehicle-wide electronic and electrical architecture to obtain an initial vehicle-wide communication topology; identifying key links in the initial vehicle-wide communication topology, and taking the identified key links as links to be provided with redundancy; identifying in-vehicle unit systems at both ends of each key link one by one, and determining design information of a redundant link based on historical communication information between the two identified in-vehicle unit systems; performing redundant link deployment in the initial vehicle-wide communication topology based on determined design information of redundant links to obtain the vehicle-wide communication topology rule.

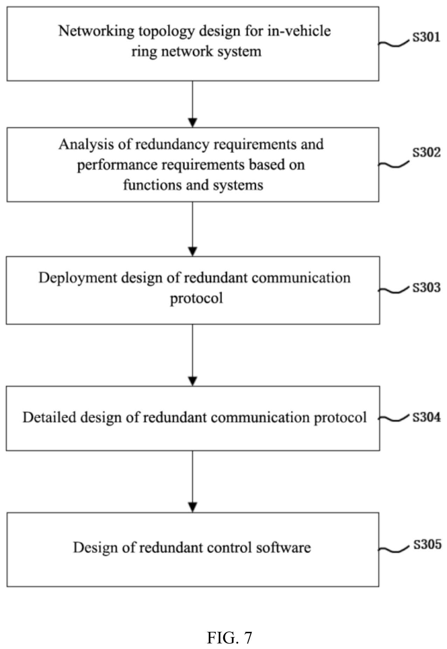

In a possible implementation, when constructing a vehicle-wide communication topology rule, as shown in FIG. 7, it includes the following steps.

Step S301: Complete the networking topology design for the in-vehicle ring network system based on the design planning of the vehicle-wide electronic and electrical architecture.

Step S302: Based on the networking and functional requirements of the in-vehicle ring network system, complete the analysis of communication redundancy requirements and redundancy performance requirements combined with functions. Taking the intelligent driving system as an example, in the intelligent assisted driving application scenario, if an Ethernet communication link between the intelligent driving system and the vehicle body controller is disconnected, in order to ensure that the vehicle can pull over safely or continue to execute assisted driving functions, then the intelligent driving system and the vehicle body control system need to be able to switch to another redundant link for communication, with the redundancy switching time being less than 10 ms.

Step S303: Based on specific requirement analysis results, design and define communication links that need redundancy, the redundant communication switching paths, and a protocol that should be selected for deployment under corresponding redundant communication performance requirements.

Step S304: Design a detailed redundant communication protocol based on the redundant paths, while taking into account compatibility strategies of the protocol under different scenarios; that is, during redundant link deployment, preset a compatibility rule for the corresponding communication protocol in each set working scenario.

Step S305: Design redundancy control software components based on a designed redundancy protocol and a hardware and software architecture of the redundant system.

In the embodiment of the present application, the solution of the present application carries out redundant link deployment. When there is a communication abnormality between any two in-vehicle unit systems subsequently, communication can be restored through a preset redundant communication link, ensuring the reliability of the vehicle-wide communication and thus ensuring driving safety.

Preferably, in the vehicle-wide communication topology, any two in-vehicle unit systems can perform communication interaction directly or perform communication interaction by taking other in-vehicle unit system(s) as relay nodes; the method further includes: performing system initialization, which includes: setting up independent redundant communication between in-vehicle unit systems of different categories based on categories to which the in-vehicle unit systems belong; setting up independent communication for triggering the communication redundancy control protocol; performing virtual local area network blocking processing on communication between the in-vehicle unit systems other than the independent redundant communication and the independent communication, to make any two in-vehicle unit systems have one and only one communication link in a normal operation state.

In a possible implementation, since there are usually multiple ring networks in an in-vehicle ring network system, and the ring networks themselves have multicast or broadcast storm risks, and it is therefore necessary to block some ports of the in-vehicle unit systems. Continuing with the structure described in Embodiment 1 as an example, ports of the switch 2 in the vehicle control system 2 that are connected to Link 1, Link 5, and Link 6 all adopt the VLAN (Virtual Local Area Network, Virtual Local Area Network) blocking method to implement bidirectional blocking (in inbound and outbound directions) for specific VLANs, so as to prevent network paralysis caused by ring network storms. The TSN-CB protocol is adopted for redundant communication between the vehicle control system and the intelligent driving system; therefore, in the present embodiment, the communication between the two systems is divided into an independent VLAN, and the above blocked VLANs do not include the VLAN for TSN-CB redundant communication. Meanwhile, since the link detection protocol uses unicast communication and operates on an independent VLAN, the above blocked VLANs also exclude a VLAN to which the link detection protocol belongs. Taking the communication between the vehicle control system 2 and the intelligent driving system, and the communication between the vehicle control system 2 and the cockpit system as examples, under the above system configuration, the communication links between the vehicle control system 2 and the intelligent driving system are Link 1 and Link 6, while the communication link between the vehicle control system and the cockpit system is Link 2 → Link 3 → Link 4 → Link 7.

Further, the categories to which the in-vehicle unit systems belong include: a vehicle control system and an assisted driving system. As illustrated in Embodiment 1, the vehicle control system 1, the vehicle control system 2, and the vehicle control system 3 belong to the vehicle control systems; the intelligent driving system and the cockpit system belong to the assisted driving systems.

In the embodiment of the present application, the intelligent driving system is required to receive information notifications about statuses related to power, chassis, and body issued by the vehicle body control, and is required to send control service invocation requests, e.g. for torque and steering, to the vehicle body control system. Based on the analysis in S302 that the communication redundancy control between the intelligent driving system and the vehicle body control system has high time performance requirements, and by synthesizing the characteristics of redundancy switching protocols in the in-vehicle communication industry and the information and communication industry, preferably, the present embodiment selects the TSN-CB protocol with short switching time as the redundancy control protocol, which is respectively deployed in the vehicle control system 1, the vehicle control system 2, and the intelligent driving system of the system shown in Embodiment 1.

Further, the communication redundancy between the intelligent driving system and the cockpit system, within the vehicle body control system, and between the vehicle body control system and the cockpit system is mainly used for ensuring user's vehicle usage experience, and its communication redundancy has relatively low time performance requirements. The TSN-CB protocol is supported by switch hardware, and the selection of chips is subject to restrictions. Most mature protocols in the current information and communication industry, such as the ERPS (Ethernet Ring Protection Switching, Ethernet Ring Protection Switching) protocol, need to be deployed on the switches; meanwhile, considering the current differences in the performance and technical support of in-vehicle switches; the present application provides a communication redundancy control protocol that can be deployed on terminal nodes. This protocol does not depend on the switch system and has good adaptability to different terminal systems, and its redundancy switching time can be controlled within 50 ms.

In another possible implementation, the present application provides a method for compatible deployment with the TSN-CB protocol. The compatible deployment can be performed on systems with inconsistent switching time performance requirements. For example, when the intelligent driving system requires redundancy for control and notification information of the vehicle control system and has high requirements for redundancy time performance, the TSN-CB protocol can be chosen to be deployed on the switches between the two systems to achieve fast redundancy switching in case of link abnormalities. When the intelligent driving system requires redundancy for control and notification information of the cockpit system and has relatively low requirements for redundancy time performance, the redundancy communication protocol provided in the present application can be chosen to be deployed on the terminal nodes of the two systems, thereby ensuring protocol compatibility. Of course, in addition to being compatible with the TSN-CB protocol, under a solution of unified protocol driving and multi-redundancy protocol combination proposed in the present application, it can theoretically be compatible with any other in-vehicle redundancy communication protocols, which is not limited herein.

Step S40: Execute the redundancy control rule to restore communication between the two current in-vehicle unit systems by adjusting communication port blocking states of relevant in-vehicle unit systems on a redundant link of the two current in-vehicle unit systems.

Specifically, as explained above, in order to avoid the risks of multicast or broadcast storms in the ring network itself, some communication ports of in-vehicle unit systems are in a blocking state. That is to say, in the normal operation state, the redundant links are usually blocked. Therefore, to achieve communication recovery, it is necessary to adjust the blocking state and bring up the links. Based on this, during the adjustment of the communication port blocking states of the relevant in-vehicle unit systems, for the same in-vehicle unit system and at the same time, only one communication port is in the forwarding state, while other communication ports are in the virtual local area network blocking state. Before adjusting the communication port blocking state of a certain communication port to the forwarding state, a corresponding in-vehicle unit system needs to first block the communication port that is originally in the forwarding state, and then proceed to current communication port blocking state adjustment.

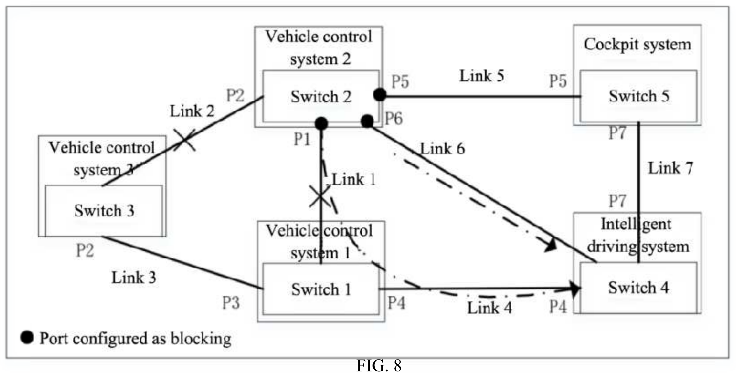

Embodiment 2, as shown in FIG. 8, in the system structure of the original Embodiment 1, taking both Link 1 and Link 2 being disconnected as an example, the steps for switching the ring network communication redundant link are as follows.

Step S401: The link abnormalities of Link 1 and Link 2 are detected based on the link detection protocol. At this time, the vehicle control system 2 cannot communicate normally with the vehicle control system 1, the vehicle control system 3 and the cockpit system.

Step S402: After detecting the link abnormalities, the vehicle control system 1, the vehicle control system 2 and the vehicle control system 3 set the status field in the redundancy control protocol to link abnormality, set the sub-status to switching required, and the link identifier corresponds to the position 1 of Link 1 and Link 2; meanwhile, to ensure fast switching, the above systems shall immediately send 3 consecutive frames of the redundancy control protocol carrying link abnormality upon detecting the link abnormality, and then send such frames at a 10ms period.

Step S403: After sending the redundancy control message carrying link abnormality, the vehicle control system 2 controls the switching of the redundant link. It directly modifies a static FDB (Forwarding Data Base, Forwarding Data Base) table and a VLAN table of the switch by modifying switch interfaces to implement communication link switching. The switching process is as follows:
1) Use a VLAN disable interface to block Port P2, while keep Port P1 in its original blocking state;
2) Use a VLAN enable interface to unblock Port P5;
3) Modify the FDB table, and change destination Ports in the FDB table entries whose destination MAC addresses correspond to the vehicle control system 2, the vehicle control system 3 and the cockpit system to P5. That is to say, the vehicle control system 2 switches to Port P5 to communicate with systems other than the intelligent driving system.

Based on the same reason, the vehicle control system 3 switches its communication port to Port P3, the vehicle control system 1 switches the port for communicating with the vehicle control system 2 to Port P4, and the cockpit system switches the port for communicating with the vehicle control system 2 to Port P5. Since the intelligent driving system and the vehicle control system 2 adopt TSN-CB redundant communication, the communication mode of this protocol is dual-transmission and single-reception, the intelligent driving system can still maintain communication with the vehicle control system via Link 6 when Link 1 is disconnected. At this point, the communication link of the ring network system is switched to Link 5→Link 7-Link 4-Link 3, and normal communication between all systems is still maintained.

Preferably, before the communication port blocking state of a certain communication port needs to be adjusted to the forwarding state, the corresponding in-vehicle unit system shall first block the communication port that was originally in the forwarding state, and proceed to current communication port blocking state adjustment.

In the embodiment of the present application, this rule is also applicable to an initialization process of the system. This is because in the in-vehicle application scenario, during a bench or vehicle assembly phase, the power-on sequence of controllers may be inconsistent, which may result in temporary link disconnection. In this case, a broadcast storm may be triggered after subsequent power-on of the in-vehicle unit systems. Based on this, similar to the subsequent redundant link control, system initialization requires real-time correction of the blocking state.

Embodiment 3, based on the system structure of Embodiment 1, taking the ring network composed of the vehicle control system 1, the vehicle control system 2 and the vehicle control system 3 as an example, if the power-on sequence is the vehicle control system 2 → the vehicle control system 1 → the vehicle control system 3 with a large power-on time difference between them, after the vehicle control system 2 and the vehicle control system 1 are powered on, the powered-on vehicle control system 2 detects that the link of Port P1 is up and the link of Port P2 is down; and the vehicle control system 2 needs to unblock P1, which is originally configured as a blocking port, to ensure normal communication with the vehicle control system 1 and block the abnormal Port P2. Subsequently, when the vehicle control system 3 is powered on, the vehicle control system 2 detects that the link of Port P2 is up at this time. If Port P2 is unblocked immediately, all links of the ring network will be active, resulting in a broadcast storm. Therefore, the present application designs a regularly blocking port; this port is unblocked as required for switching when an abnormality occurs in the ring network link, and returns to the blocking state after the link recovers to normal. In the above embodiment, after the vehicle control system 2 detects that the link of Port P2 is up, it first blocks the regularly blocking port P1, then unblocks Port P2 and sends a link redundancy control protocol to notify the vehicle control system 1 of switching its communication port to Port P3.

In the embodiment of the present application, neither the link detection protocol nor the communication redundancy control protocol designed in the solution of the present application needs to be deployed in the switch. During software implementation, both protocols are deployed in the terminal system. The switch provides the terminal system with interfaces for FDB table update and port VLAN control interfaces through a communication channel with the terminal system, so as to control the switch to perform communication link switching. Therefore, the protocol stack can be flexibly deployed without special requirements for terminal chips. Meanwhile, to ensure switching efficiency, the software related to redundancy switching control on the terminal side adopts a high-priority interrupt processing mode, which ensures that the redundancy switching time is less than 50 ms.

In a possible implementation, software components involved in the redundancy control method for the in-vehicle ring network heterogeneous system proposed in the solution of the present application do not depend on switch hardware. These software components can be adapted to both the switch system and the terminal system without special hardware requirements for the terminal; the terminal only needs to be equipped with a control channel to the switch. The software components are implemented based on C/C++ code, and can be deployed and adapted in both a SOC system and an embedded system.

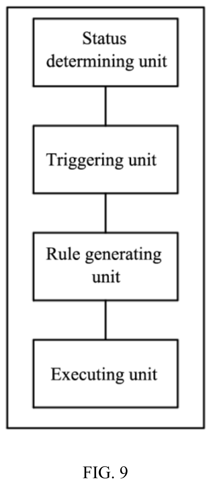

FIG. 9 is a system structural diagram of a redundancy control system for an in-vehicle ring network heterogeneous system provided in an implementation of the present application. As shown in FIG. 9, an implementation of the present application provides a redundancy control system for an in-vehicle ring network heterogeneous system. The system includes: a status determining unit, configured to in each ring network, regularly exchange detection messages by any two adjacent in-vehicle unit systems, and determine a communication link status corresponding to the two in-vehicle unit systems based on a message exchange result; a triggering unit, configured to trigger, when the communication link status is abnormal, a communication redundancy control protocol; a rule generating unit, configured to determine, in response to the communication redundancy control protocol, position information of the two in-vehicle unit systems with an abnormal communication link in a vehicle-wide communication topology, and generate, based on the position information, a redundancy control rule for restoring communication between the two current in-vehicle unit systems; an executing unit, configured to execute the redundancy control rule to restore communication between the two current in-vehicle unit systems by adjusting communication port blocking states of relevant in-vehicle unit systems on a preset new communication link of the two current in-vehicle unit systems; where the relevant in-vehicle unit systems are in or not in a same ring network.

An implementation of the present application further provides a computer-readable storage medium, where the computer-readable storage medium stores instructions, which, when running on a computer, cause the computer to implement the redundancy control method for the in-vehicle ring network heterogeneous system described above.

Those skilled in the art may understand that all or part of the steps in the methods for implementing the above implementations may be completed by instructing relevant hardware through a program. The program is stored in a storage medium and includes several instructions for enabling a single-chip microcomputer, chip or processor (processor) to execute all or part of the steps in the methods described in the various implementations of the present application. The above storage medium includes various media that can store program code, such as a USB flash drive, a removable hard disk, a read-only memory (ROM, Read-Only Memory), a random access memory (RAM, Random Access Memory), a magnetic disk or an optical disc.

The optional implementations of the present application have been described in detail above with reference to the accompanying drawings. However, the implementations of the present application are not limited to the specific details in the above implementations. Within the scope of the technical concept of the implementations of the present application, various simple modifications may be made to the technical solutions of the implementations of the present application, and all such simple modifications shall fall within the protection scope of the implementations of the present application. In addition, it should be noted that the various specific technical features described in the above specific implementations may be combined in any appropriate manner if there is no contradiction. To avoid unnecessary repetition, the implementations of the present application do not separately describe all possible combinations.

Furthermore, any combination may be made between the various different implementations of the present application, provided that such combination does not contradict the concept of the implementations of the present application, and such combination shall also be deemed as the content disclosed by the implementations of the present application.

## Claims

1. A redundancy control method for an in-vehicle ring network heterogeneous system, comprising:
in each ring network, regularly exchanging, by any two adjacent in-vehicle unit systems, detection messages, and determining a communication link status corresponding to the two in-vehicle unit systems based on a message exchange result;
triggering, when the communication link status is abnormal, a communication redundancy control protocol;
in response to the communication redundancy control protocol, determining position information of the two in-vehicle unit systems with an abnormal communication link in a vehicle-wide communication topology, and generating, based on the position information, a redundancy control rule for restoring communication between the two current in-vehicle unit systems;
executing the redundancy control rule to restore communication between the two current in-vehicle unit systems by adjusting communication port blocking states of relevant in-vehicle unit systems on a redundant link of the two current in-vehicle unit systems; wherein the relevant in-vehicle unit systems are in or not in a same ring network.

2. The redundancy control method for the in-vehicle ring network heterogeneous system according to claim 1, wherein the method further comprises: constructing a vehicle-wide communication topology rule, comprising:
designing a networking topology for an in-vehicle ring network system based on design information of a vehicle-wide electronic and electrical architecture to obtain an initial vehicle-wide communication topology;
identifying key links in the initial vehicle-wide communication topology, and taking the identified key links as links to be provided with redundancy;
identifying in-vehicle unit systems at both ends of each key link one by one, and determining design information of a redundant link based on historical communication information between the two identified in-vehicle unit systems;
performing redundant link deployment in the initial vehicle-wide communication topology based on determined design information of redundant links to obtain the vehicle-wide communication topology rule.

3. The redundancy control method for the in-vehicle ring network heterogeneous system according to claim 2, wherein the determining the design information of the redundant link comprises: determining communication performance and a corresponding communication protocol of the redundant link; wherein the determined communication protocol needs to meet a corresponding communication performance requirement;
the method further comprises: during the redundant link deployment, presetting a compatibility rule for the corresponding communication protocol in each set working scenario.

4. The redundancy control method for the in-vehicle ring network heterogeneous system according to any one of claims 1-3, wherein the regularly exchanging, by any two adjacent in-vehicle unit systems, the detection messages, and determining the communication link status corresponding to the two in-vehicle unit systems based on the message exchange result, comprises:
exchanging, by the two adjacent in-vehicle unit systems, based on a preset link detection protocol, link detection messages respectively generated by the two in-vehicle unit systems;
generating, by each in-vehicle unit system, a feedback message record based on a number of received link detection messages, and sending the feedback message record back to an in-vehicle unit system at the other end;
determining, by each in-vehicle unit system based on the preset link detection protocol, the sent number of link detection messages and the received number recorded in the feedback message to determine a current communication link status.

5. The redundancy control method for the in-vehicle ring network heterogeneous system according to claim 4, wherein the determining, by each in-vehicle unit system based on the preset link detection protocol, the sent number of link detection messages and the received number recorded in the feedback message to determine the current communication link status, comprises:
when each in-vehicle unit system acts as a message sender and a message receiver, respectively determining the sent number of link detection messages and the received number recorded in the feedback message based on the preset link detection protocol;
for the message sender, when it is determined, based on the preset link detection protocol, that an absolute value of a difference between the sent number of link detection messages and the received number recorded in the feedback message from the in-vehicle unit system at the other end is greater than or equal to a first preset threshold, determining that a first abnormal condition is established; otherwise, determining that the first abnormal condition is not established;
for the message receiver, when the in-vehicle unit system at the other end determines, based on the preset link detection protocol, that an absolute value of a difference between the sent number of link detection messages and the received number recorded in the feedback message is greater than or equal to a second preset threshold, determining that a second abnormal condition is established; otherwise, determining that the second abnormal condition is not established;
when both the first abnormal condition and the second abnormal condition are established, determining that the communication link status between the two current in-vehicle unit systems is abnormal.

6. The redundancy control method for the in-vehicle ring network heterogeneous system according to any one of claims 1-5, wherein in the vehicle-wide communication topology, any two in-vehicle unit systems are able to directly perform communication interaction or perform communication interaction by taking another in-vehicle unit system as a relay node;
the method further comprises: performing system initialization, comprising:
setting up independent redundant communication between in-vehicle unit systems of different categories based on categories to which the in-vehicle terminal systems belong;
setting up independent communication for triggering the communication redundancy control protocol;
performing virtual local area network blocking processing on communication between in-vehicle unit systems other than the independent redundant communication and the independent communication, to make any two in-vehicle unit systems have one and only one communication link in a normal operation state.

7. The redundancy control method for the in-vehicle ring network heterogeneous system according to any one of claims 1-6, wherein the categories to which the in-vehicle unit systems belong comprise: a vehicle control system and an assisted driving system.

8. The redundancy control method for the in-vehicle ring network heterogeneous system according to any one of claims 1-7, wherein the communication redundancy control protocol comprises:
a protocol type identifier, a status, a sub-status, a node identifier, a link identifier and an extension field;
the protocol type identifier is used to indicate a protocol type;
the status is used to indicate a link status;
the sub-status is used to identify whether link switching needs to be executed;
the link identifier is used to label a link number;
the extension field is used to indicate additional information of a message.

9. The redundancy control method for the in-vehicle ring network heterogeneous system according to any one of claims 1-8, wherein before triggering the communication redundancy control protocol, the method further comprises:
when the communication link status is abnormal, continuously sending a preset number of frames of the communication redundancy control protocol carrying link abnormality to a corresponding in-vehicle unit system, and sending the communication redundancy control protocol once every preset triggering cycle until the communication redundancy control protocol is triggered.

10. The redundancy control method for the in-vehicle ring network heterogeneous system according to any one of claims 1-9, wherein the generating, based on the position information, the redundancy control rule for restoring communication between the two current in-vehicle unit systems, comprises:
determining a relay in-vehicle unit system on the redundant link between the two current in-vehicle unit systems based on the position information;
determining blocking states of communication ports of the relay in-vehicle unit system and the two current in-vehicle unit systems when the redundant link is active, and taking the blocking states as target states for in-vehicle unit systems;
modifying, based on the target states, forwarding database static tables and virtual local area network tables for switches of the in-vehicle unit systems, and taking the modified forwarding database static tables and the modified virtual local area network tables for the switches as the redundancy control rule for the communication between the two current in-vehicle unit systems.

11. The redundancy control method for the in-vehicle ring network heterogeneous system according to any one of claims 1-10, wherein the executing the redundancy control rule and adjusting the communication port blocking states of the relevant in-vehicle unit systems on the redundancy link of the two current in-vehicle unit systems, comprises:
during the adjustment of the communication port blocking states of the relevant in-vehicle unit systems, for a same in-vehicle unit system at a same time, only one communication port is in a forwarding state, other communication ports are in a virtual local area network blocking state;
before adjusting the communication port blocking state of a certain communication port to a forwarding state, a corresponding in-vehicle unit system blocks a communication port that was originally in the forwarding state, and then proceed to adjust a current communication port blocking state.

12. A redundancy control system for an in-vehicle ring network heterogeneous system, comprising:
a status determining unit, configured to in each ring network, regularly exchange detection messages by any two adjacent in-vehicle unit systems, and determine a communication link status corresponding to the two in-vehicle unit systems based on a message exchange result;
a triggering unit, configured to trigger, when the communication link status is abnormal, a communication redundancy control protocol;
a rule generating unit, configured to determine, in response to the communication redundancy control protocol, position information of the two in-vehicle unit systems with an abnormal communication link in a vehicle-wide communication topology, and generate, based on the position information, a redundancy control rule for restoring communication between the two current in-vehicle unit systems;
an executing unit, configured to execute the redundancy control rule to restore communication between the two current in-vehicle unit systems by adjusting communication port blocking states of relevant in-vehicle unit systems on a preset new communication link of the two current in-vehicle unit systems; wherein the relevant in-vehicle unit systems are in or not in a same ring network.

13. A computer-readable storage medium, wherein the computer-readable storage medium stores instructions, which, when running on a computer, cause the computer to implement the redundancy control method for the in-vehicle ring network heterogeneous system according to any one of claims 1-11.

14. A computer program, comprising program code, wherein when a computer runs the computer program, the program code implements the method according to any one of claims 1-11.
